# EUROPÄISCHE PATENTSCHRIFT

(11) **EP 1 045 780 B1**
(45) Veröffentlichungstag und Bekanntmachung des Hinweises auf die Patenterteilung: **06.10.2004**
(21) Anmeldenummer: 99967827.9
(22) Anmeldetag: 14.07.1999
(51) Int. Cl.: B60S 1/34, B60S 1/38

(54) **SCHEIBENWISCHER**
WINDSCREEN WIPER
ESSUIE-GLACE

(30) Priorität: 18.08.1998 DE 19837359
(43) Veröffentlichungstag der Anmeldung: 25.10.2000
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE1999/002171
(87) Internationale Veröffentlichungsnummer: WO 2000/010844

(56) Entgegenhaltungen:
- EP-A- 0 368 091
- EP-A- 0 575 241
- EP-A- 0 845 394
- DE-A- 4 439 275

## Beschreibung

### Stand der Technik

Die Erfindung geht aus von Scheibenwischern nach der Gattung der unabhängigen Ansprüche.

Bekannte Scheibenwischer besitzen einen Wischarm, der aus einem Befestigungsteil und einem daran angelenkten Gelenkteil mit einer Wischstange aufgebaut ist. Ein hakenförmiges Ende der Wischstange greift in einen Einhängekasten eines Wischblatts, der zwischen zwei Seitenwangen eines Mittelbügels gebildet wird, und umfaßt einen Gelenkstift. Das so gebildete Gelenk führt das Wischblatt während der Schwenkbewegung über die Scheibe. Das Wischblatt besitzt in der Regel ein mehrgliederiges Tragbügelsystem mit an dem Mittelbügel über weitere Gelenkstifte angelenkten, untergeordneten Bügeln, von denen zumindest einige mit Krallen an ihren Enden eine Wischleiste an deren Kopfleiste halten. Das mehrgliederige Tragbügelsystem und in die Kopfleiste eingelegte Federschienen ermöglichen, daß sich beim Wischen die Wischleiste mit einem gleichmäßigen Auflagedruck einer gebogenen Windschutzscheibe anpaßt. Solche Scheibenwischer sind z.B. aus der gattungsbildenden DE 37 44 237 A1 bekannt. Bei vereinfachten Ausführungen können untergeordnete Bügel, auch Zwischenbügel und Krallenbügel genannt, entfallen. Im einfachsten Fall besitzt der Mittelbügel selbst Krallen, mit denen er die Wischleiste hält.

Der Gelenkbolzen bzw. die Gelenkstifte werden durch Bohrungen in den Seitenwänden der sich zum Teil überlappenden Bauteile gesteckt und an den Enden vernietet. Dadurch entstehen auf den Außenseiten vorstehende Nietköpfe, die die Luftströmung und den optischen Eindruck stören sowie zu Korrosion neigen.

### Vorteile der Erfindung

Nach der Erfindung werden der Gelenkbolzen und die Gelenkstifte an den Innenseiten der Seitenwände des äußeren Bauteils angeschweißt. Dadurch ergeben sich an den Außenseiten glatte Oberflächen, die sowohl strömungsgünstig sind als auch gefälliger aussehen. Ferner können sich in diesen Bereichen Schmutz und Feuchtigkeit kaum halten, so daß diese Stellen weniger korrosionsgefährdet sind.

Um die Fertigung zu erleichtern, sind an den Innenseiten im Bereich des Gelenkbolzens bzw. der Gelenkstifte Einprägungen vorgesehen, in die der Gelenkbolzen bzw. die Gelenkstifte mit ihren konvex gestalteten Enden einrasten können, bevor sie mit den Seitenwänden verschweißt werden. Zum Verschweißen eignet sich besonders gut ein Widerstandsschweißverfahren.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

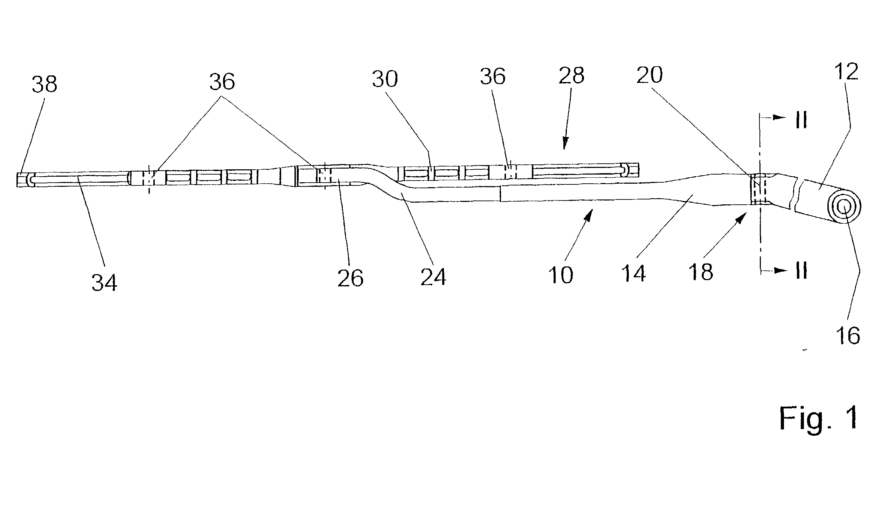

- Fig. 1: eine Draufsicht auf einen Scheibenwischer,
- Fig. 2: einen Schnitt entsprechend der Linie II-II in Fig. 1 und
- Fig. 3: einen Schnitt durch einen teilweise montierten Wischarm entsprechend Fig. 2.

### Beschreibung der Ausführungsbeispiele

Ein Wischarm 10 ist aus einem Befestigungsteil und einem Gelenkteil 14 mit einer Wischstange 24 aufgebaut. An dem Wischarm 10 ist ein Wischblatt 28 angelenkt, indem ein hakenförmiges Ende 26 der Wischstange 24 zwischen Seitenwangen eines Mittelbügels 30 des Wischblatts 28 greift und einen Gelenkstift 36 umfaßt. An den Enden des Mittelbügels 30 sind durch weitere Gelenkstifte 36 untergeordnete Bügel in Form von Krallenbügeln 34 angelenkt, die eine Wischleiste 38 halten.

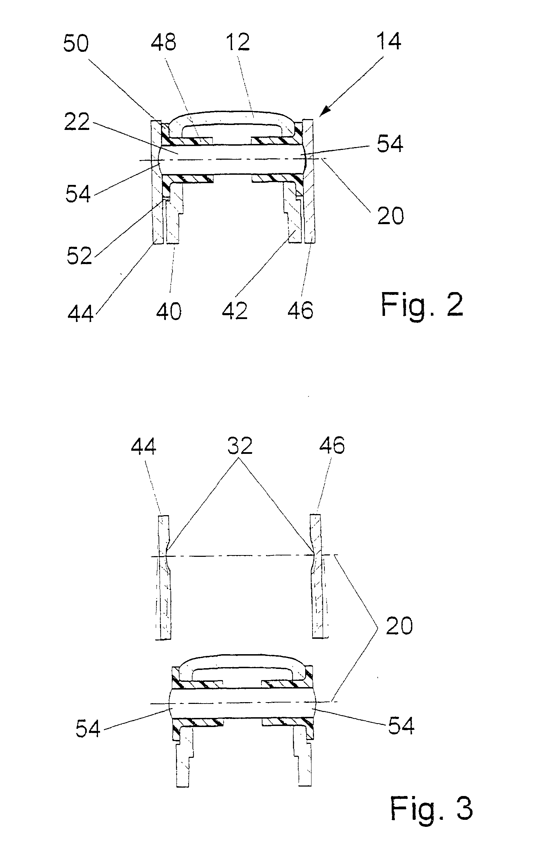

Das Befestigungsteil 12 besitzt an einem Ende eine Lagerstelle 16, an der es an einer Antriebswelle eines nicht naher dargestellten Wischerantriebs befestigt ist. An seinem anderen Ende bildet es mit dem Gelenkteil 14 ein Gelenk 18, indem Seitenwände 44 und 46 (Fig. 2) im Bereich des Gelenks 18 Seitenwände 40 und 42 des Befestigungsteils 12 überdecken und über einen Gelenkbolzen 22 um eine Gelenkachse 20 schwenkbar verbunden sind. Der Gelenkbolzen 22 besitzt konvexe Enden 54, mit denen er in Einprägungen 32 der äußeren Seitenwände 44, 46 des Gelenkteils 14 einrastet. Nach der Vormontage wird der Gelenkbolzen 22 mit den Seitenwänden 44, 46 durch Widerstandsschweißen verbunden. Die Außenflächen der Seitenwände 44, 46 sind dadurch eben und strömungsgünstig. Da sich an ihnen keine aggressiven Medien und Schmutz ablagern können, sind sie außerdem korrosionbeständig.

Auf dem Gelenkbolzen 22 ist das Befestigungsteil 12 über Lagerbuchsen 48 gelagert, die einen Kragen 50 zwischen der Seitenwand 40, 42 und der Seitenwand 44, 46 haben, um den metallischen Kontakt zwischen diesen Seitenwänden zu vermeiden. Die äußere Fläche der Seitenwand 40, 44 besitzt einen Absatz 52, der den Kragen 50 zum Teil axial überdeckt und somit den Spalt zwischen der äußeren Seitenwand 44, 46 und der inneren Seitenwand 40, 42 verkleinert.

Fig. 3 zeigt das Gelenk 18 im halbmontierten Zustand. Im Befestigungsteil 12 sind bereits die Lagerbuchsen 48 und der Gelenkbolzen 22 vormontiert. Um das Befestigungsteil zwischen die Seitenwände 44 und 46 einzuschieben, werden diese leicht elastisch aufgebogen, wie mit strichpunktierten Linien angedeutet ist, so daß die Enden 54 des Gelenkbolzens 22 in die Einprägungen 32 einrasten können.

Die in Fig. 2 und 3 näher dargestellte Verbindung zwischen dem Gelenkbolzen 22 und den Seitenwänden 44, 46 kann in entsprechender Weise für die Verbindung der Gelenkstifte 36 mit dem Mittelbügel 30 und den Krallenbügeln 34 angewendet werden.

### Bezugszeichen

- 10: Wischarm
- 12: Befestigungsteil
- 14: Gelenkteil
- 16: Lagerstelle
- 18: Gelenk
- 20: Gelenkachse
- 22: Gelenkbolzen
- 24: Wischstange
- 26: hakenförmiges Ende
- 28: Wischblatt
- 30: Mittelbügel
- 32: Einprägung
- 34: Krallenbugel
- 36: Gelenkstift
- 38: Wischleiste
- 40: Seitenwand
- 42: Seitenwand
- 44: Seitenwand
- 46: Seitenwand
- 48: Lagerbuchse
- 50: Kragen
- 52: Absatz
- 54: Ende

## Patentansprüche

1. Scheibenwischer mit einem Wischarm (10), der aus einem Befestigungsteil (12) und einem Gelenkteil (14) mit einer Wischstange (24) aufgebaut ist, wobei Gelenke (18) mit einem Gelenkbolzen (22) bzw. Gelenkstiften (36) vorgesehen sind, die zwischen Seitenwänden der sich zum Teil überlappenden Bauteile (12, 14; bzw. 30, 34) gehalten werden, **dadurch gekennzeichnet, daß** der Gelenkbolzen (22) bzw. die Gelenkstifte (36) an den Innenseiten der Seitenwände (44, 46) des äußeren Bauteils (14, bzw. 30) angeschweißt sind.

2. Scheibenwischer mit einem Wischblatt (28), das ein Tragbügelsystem mit mindestens einem Mittelbügel (30) und daran angelenkten, untergeordneten Bügeln (34) aufweist, wobei Gelenke (13) mit einem Gelenkbolzen (22) bzw. Gelenkstiften (36) vorgesehen sind, die zwischen Seitenwänden der sich zum Teil überlappenden Bauteile (12, 14; bzw. 30, 34) gehalten werden, **dadurch gekennzeichnet, daß** der Gelenkbolzen (22) bzw. die Gelenkstifte (36) an den Innenseiten der Seitenwände (44, 46) des äußeren Bauteils (14, bzw. 30) angeschweißt sind.

3. Scheibenwischer nach Anspruch 1 oder 2, **dadurch gekennzeichnet, daß** der Gelenkbolzen (22) bzw. die Gelenkstifte (36) durch Widerstandsschweißen angeschweißt sind.

4. Scheibenwischer nach einem der vorhergehenden Ansprüche, **dadurch gekennzeichnet, daß** die Seitenwände (44, 46) des äußeren Bauteils (14) an den Innenseiten Einprägungen (32) haben, in die der Gelenkbolzen (22) bzw. die Gelenkstifte (36) mit konvexen Enden (54) vor dem Verschweißen einrasten.

## Claims

1. Wiper having a wiper arm (10) which is constructed from a fastening part (12) and a hinge part (14) having a wiper rod (24), hinges (18) being provided with a hinge bolt (22) and hinge pins (36) which are held between side walls of the partially overlapping components (12, 14; and 30, 34, respectively), **characterized in that** the hinge bolt (22) and the hinge pins (36) are welded to the insides of the side walls (44, 46) of the outer component (14 and 30, respectively).

2. Wiper having a wiper blade (28) which has a supporting strap system with at least one central strap (30) and subordinate straps (34) articulated thereon, hinges (18) being provided with a hinge bolt (22) and hinge pins (36) which are held between side walls of the partially overlapping components (12, 14; and 30, 34, respectively), **characterized in that** the hinge bolt (22) and the hinge pins (36) are welded to the insides of the side walls (44, 46) of the outer component (14 and 30, respectively).

3. Wiper according to Claim 1 or 2, **characterized in that** the hinge bolt (22) and the hinge pins (36) are welded on by means of resistance welding.

4. Wiper according to one of the preceding claims, **characterized in that** the side walls (44, 46) of the outer component (14) have, on the insides, impressions (32) into which the hinge bolt (22) and the hinge pins (36) latch by means of convex ends (54) before the welding.

## Revendications

1. Essuie-glace comportant un bras d'essuie-glace (10) qui se compose d'une pièce de fixation (12) et d'une pièce d'articulation (14) munie d'une tige d'essuie-glace (24), avec des articulations (18) munies d'un axe d'articulation (22) ou de chevilles d'articulation (36) et maintenues entre les parois latérales des composants (12, 14 ou 30, 34) qui se chevauchent en partie,
**caractérisé en ce que**
l'axe d'articulation (22) ou les chevilles d'articulation (36) sont soudées sur les faces intérieures des parois latérales (44, 45) du composant extérieur (14 ou 30).

2. Essuie-glace comportant une raclette d'essuie-glace (28) qui présente un système d'étriers porteurs muni d'au moins un étrier médian (30) et d'étriers (34) subordonnés qui y sont articulés, avec des articulations (18) munies d'un axe d'articulation (22) ou de chevilles d'articulation (36) et maintenues entre les parois latérales des composants (12, 14 ou 30, 34) qui se chevauchent en partie,
**caractérisé en ce que**
l'axe d'articulation (22) ou les chevilles d'articulation (36) sont soudées sur les faces intérieures des parois latérales (44, 45) du composant extérieur (14 ou 30).

3. Essuie-glace selon la revendication 1 ou 2,
**caractérisé en ce que**
l'axe d'articulation (22) ou les chevilles d'articulation (36) sont soudées par soudage résistif.

4. Essuie-glace selon l'une des revendications précédentes,
**caractérisé en ce que**
sur les faces intérieures, les parois latérales (44, 46) du composant extérieur (14) ont des estampages (32) dans lesquels l'axe d'articulation (22) ou les chevilles d'articulation (36) s'accrochent par des extrémités (54) convexes avant le soudage.
